# EUROPEAN PATENT SPECIFICATION

(11) **EP 2 353 694 B1**
(45) Date of publication and mention of the grant of the patent: **12.09.2012**
(21) Application number: 10150136.9
(22) Date of filing: 05.01.2010
(51) Int. Cl.: B01D 35/30, B01D 53/04

(54) **Filter element, filter installation provided with such a filter element, and connecting plate and flange for use in such a filter installation**
Filterelement, Filterinstallation mit dem Filterelement, und Verbindungsplatte und Flansch zur Verwendung in der Filterinstallation
Élément filtrant, installation filtrante dotée d'un tel élément filtrant, plaque de connexion et bride pour une utilisation dans une telle installation filtrante

(43) Date of publication of application: 10.08.2011
(73) Proprietor: CF-Groep B.V., 4233 GK Ameide (NL)
(72) Inventor: De Groot, Andries, 4233 HS, Ameide (NL); Vonk, Lucas Cornelis, 4231 DN, Meerkerk (NL)
(74) Representative: de Lange, Hendrik Cornelis

(56) References cited:
- WO-A1-2004/091750
- DE-U1- 29 609 334
- US-A- 3 520 417

## Description

The invention relates to a filter element, comprising:
- two at least substantially cylindrical gas-permeable walls, wherein an outer wall extends concentrically at a distance round an inner wall such that the two walls define a space in which a filter material is arranged;
- an annular first closing member extending between the two walls close to a first end zone of the filter element for the purpose of closing the space close to the first end zone;
- a disc-like second closing member extending close to the second end zone of the filter element for the purpose of closing the filter element close to the second end zone; and
- coupling means for releasable coupling of the first end zone of the filter element to a connecting plate or flange such that in connected position the filter element connects concentrically to an opening in the connecting plate or flange.

Such a filter element is per se known and is applied for instance in filter installations for filtering air. A known filter element comprises a double-walled perforated steel tube, wherein active carbon is arranged in a space between the two walls. The filter element is provided on its one outer end with an annular disc which closes the space between the two walls, and on its other outer end with a circular cover for closing the filter element. During operation the known filter element is attached with its one outer end to a connecting plate or flange by means of a snap connection, wherein a seal is arranged between the annular disc and the connecting plate or flange.

A drawback of the known filter element is that due to its weight it compresses the seal on a bottom side during operation such that the filter element extends at a slight angle relative to the connecting plate or flange. The seal herein does not properly seal the connection between the filter element and the connecting plate or flange close to the top side, whereby air can be drawn into the opening in the connecting plate or flange which has not been filtered by the active carbon filter.

Document D1 (WO 2004/091750) discloses a filter element comprising two cylindrical gas-permeable walls, an annular first closing member extending between the two walls and coupling means for releasable coupling the filter to the header assembly in any suitable manner, such as threaded or welded. Document D2 (DE 296 09 334) discloses a filter element comprising two cylindrical walls and an annular closing member, comprising at least two toadstool-like connecting elements.

It is an object of the invention to provide a filter element which effectively filters all indrawn gases, such as for instance air.

This object is achieved by providing a filter element of the type stated in the preamble which is distinguished from the known filter elements in that:
- the two walls and the first closing member define a cavity close to the first end zone of the filter element for accommodating a seal; and that
- during operation a first outer end of the outer wall is in direct contact with the connecting plate or flange.

Because the first outer end of the outer wall is in direct contact with the connecting plate or flange during operation, wherein the seal between the filter element and the connecting plate or flange is situated in the cavity for the purpose of at least gastight sealing of the connection, the above stated problem of the known art does not occur. It will hereby only be possible to draw in air via the two walls, whereby all indrawn air is effectively filtered.

In a preferred embodiment of the filter element according to the invention the inner wall extends close to the first end zone of the filter element over a greater length in axial direction than the outer wall in order to form a centering edge for the purpose of centering the filter element on the connecting plate or flange.

Applicant has found that with the known filter element the positioning of the filter element on the connecting plate or flange is not always easy. Providing the extended inner wall according to the invention enables easy centering of the filter element on the opening in the connecting plate or flange, whereby positioning of the filter element on the connecting plate or flange can take place in simple manner.

A first outer end of the inner wall preferably comprises a chamfering facing toward the outer wall. This further increases the simplicity of positioning of the filter element on the connecting plate or flange.

In a subsequent preferred embodiment of the filter element according to the invention the two walls are provided with openings along their periphery.

In a subsequent preferred embodiment of the filter element according to the invention the filter material is active carbon. A filter of active carbon has the advantage that odours are efficiently neutralized.

In a subsequent preferred embodiment of the filter element according to the invention the coupling means comprise at least two toadstool-like connecting elements extending from the first closing member in a direction away from the space, these connecting elements being suitable for arranging in keyholes of the connecting plate or flange.

Such toadstool-like connecting elements can be readily arranged in the wide part of the keyhole of the connecting plate or flange. By then moving the filter element rotatingly the connecting elements will extend in the narrow part of the keyhole such that the connection between the filter element and the connecting plate or flange is brought about in simple manner. Such a connection can be effected easily and/or with little force. Using such a connection the filter element can moreover be easily uncoupled from the connecting plate or flange by rotating the filter element in an opposite direction.

In a subsequent preferred embodiment of the filter element according to the invention the second closing member comprises a handgrip for gripping the second closing member for the purpose of displacing the filter element.

An advantage of such a handgrip is that it can be readily used for positioning the filter element on the connecting plate or flange and/or for rotating the filter element in the case the coupling means comprise above described toadstool-like connecting elements.

The invention also relates to a filter installation for filtering air, comprising:
- a suction fan for suctioning air, which suction fan is provided with a connecting plate or flange;
- at least one filter element as described above, which is connected to the connecting plate or flange such that the filter element is connected concentrically to an opening in the connecting plate or flange, wherein the first outer end of the outer wall of the filter element is in direct contact with the connecting plate or flange; and
- a seal situated in the cavity of the filter element.

Such a filter installation has the advantage that, as elucidated above, the air can only be suctioned via the two walls of the filter element, whereby all indrawn air is effectively filtered.

The seal is preferably annular. This has the advantage that it can be easily arranged in the annular cavity.

The seal is preferably manufactured from an elastically compressible material. Because the seal in the filter installation according to the invention has no structural function at all, it can be given a less stiff form compared to the known seal. This has the advantage that the filter element can be attached easily to the connecting plate or flange. Owing to the elastic compression the material can moreover be compressed more easily than is the case with the known seal, whereby the dimensions of the attaching means are less critical.

In a preferred embodiment of the filter installation according to the invention the connecting plate or flange is provided with at least two keyholes which are suitable for receiving toadstool-like connecting elements of the filter element.

The invention also relates to a connecting plate for use in a filter installation as described above, comprising a plate-like body with at least one opening, wherein at least two keyholes are arranged around the opening.

The invention also relates to a connecting flange for use in a filter installation as described above, comprising an annular body and a cylindrical body which extends from the annular body and which is suitable for arranging in an opening of the suction fan through which the air is to flow, wherein at least two keyholes are arranged in the annular body.

The invention will be further elucidated on the basis of figures shown in a drawing, wherein
- figure 1 shows a perspective view of a first embodiment of a filter element;
- figure 2 shows in detail a part of the filter element of figure 1;
- figure 3 shows a filter installation provided with a filter element according to the embodiment of figure 1;
- figure 4 shows a cross-section of the filter element according to a second embodiment in a position connected to a connecting plate;
- figure 5 shows in detail a part of the filter element of figure 4;
- figure 6 shows a perspective view of the filter element according to the second embodiment;
- figure 7 shows a cross-section of the filter element of figure 6 in a position connected to a flange; and
- figure 8 shows in detail a part of the filter element of figure 7.

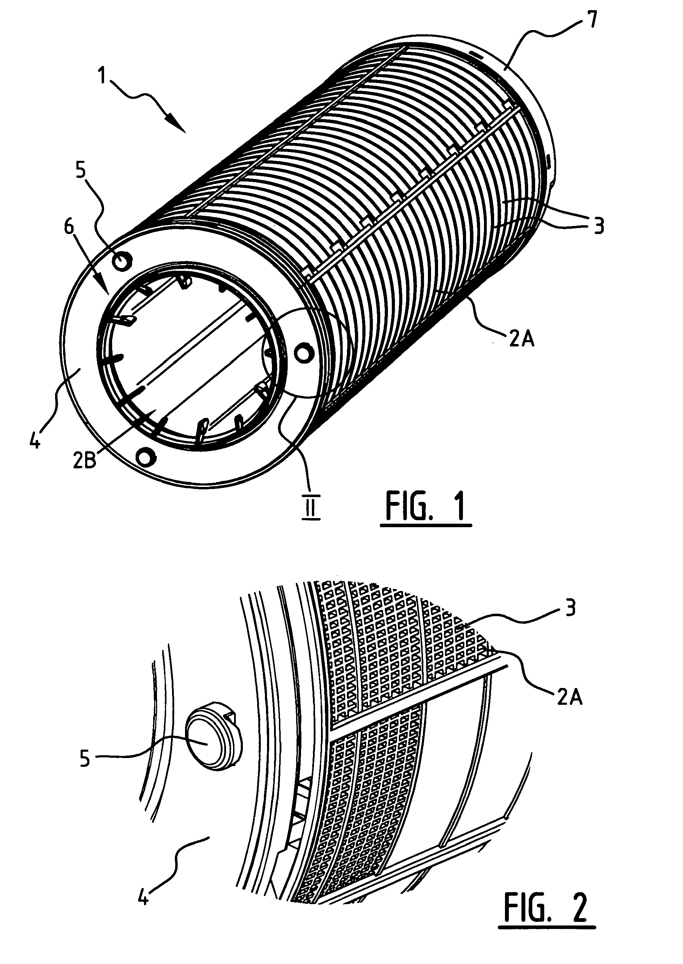

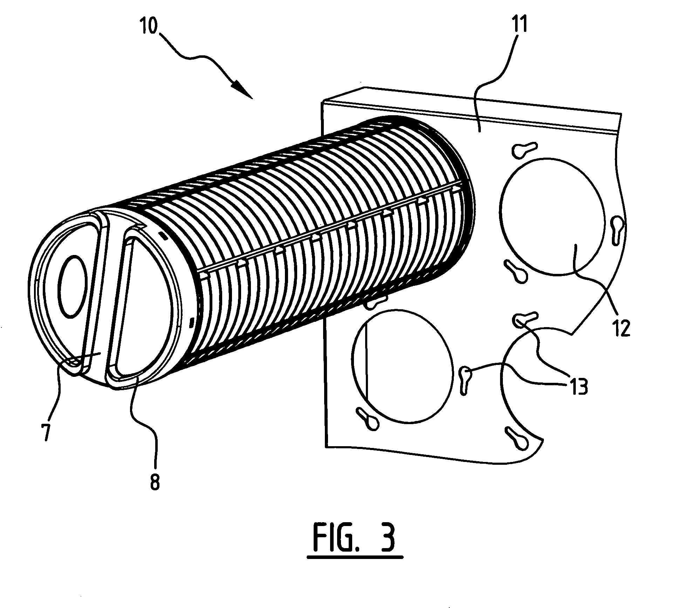

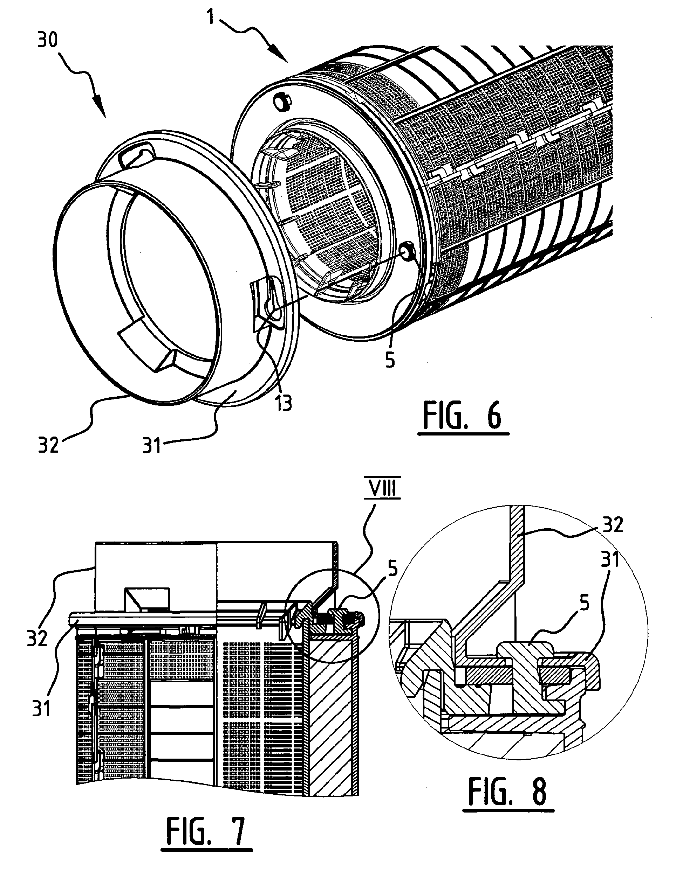

Figures 1 and 2 show a filter element 1 comprising two cylindrical, preferably steel walls 2A,B provided with openings 3, wherein an outer wall 2A extends at a distance concentrically round an inner wall 2B. Thus defined between the two walls 2A,B is a space in which a filter material, preferably active carbon, is arranged (not shown). The space between the two walls 2A,B is closed close to a first end zone of the filter element by an annular, preferably plastic disc 4 extending between the two walls 2A,B close to the first end zone of the filter element. Extending from annular disc 4 are three toadstool-like, preferably plastic or steel connecting elements 5 which serve to connect filter element 1 to a connecting plate or flange (see figures 3 and 6). Connecting elements 5 are preferably formed integrally with annular disc 4. Annular disc 4 defines together with outer wall 2A and inner wall 2B an annular cavity 6 suitable for accommodating a preferably annular and/or elastically compressible seal. Close to the first end zone of the filter element the inner wall 2B extends over a greater length in axial direction than outer wall 2A, wherein a first outer end of inner wall 2B is provided with a chamfering facing toward outer wall 2A. Close to the second end zone filter element 1 is provided with a round, preferably plastic disc 7 which closes the filter element close to the second end zone.

Figure 1 shows that outer wall 2A of filter element 1 is constructed from two mutually connected semicylindrical walls. Such an outer wall is simple to manufacture. Outer wall 2A can however also be formed from one wall.

Figure 3 shows a filter installation 10 provided with a filter element 1 connected to a connecting plate 11. As shown in figure 3, disc 7 comprises a handgrip 8 which can be used to fasten filter element 1 to connecting plate 11. This takes place by centering first outer end 7 of inner wall 2B on an opening 12 in connecting plate 11, which can take place in simple manner in that inner wall 2B extends over a greater length in axial direction than outer wall 2A and the first outer end of inner wall 2B is provided with the chamfering facing toward outer wall 2A, and by then rotating filter element 1 in clockwise direction using handgrip 8. The toadstool-like connecting elements 5 will here enter the wide part of the three keyholes 13, wherein following further clockwise rotation a strong connection is effected between filter element 1 and connecting plate 11 in that connecting elements 5 then extend in the narrow part of keyholes 13. In the connected situation a first outer end of outer wall 2A extends against connecting plate 11.

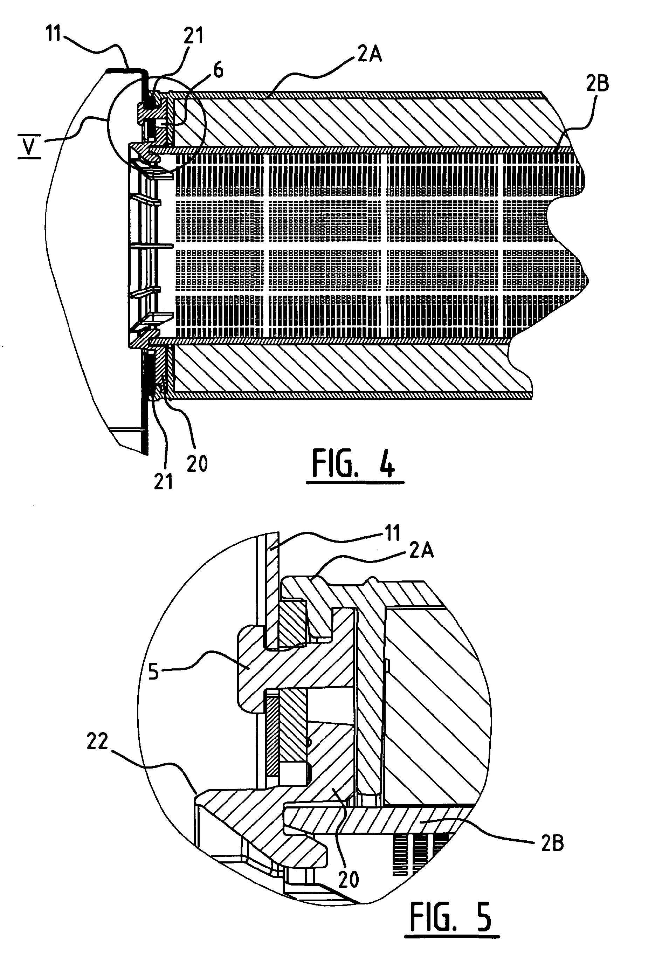

Figures 4 and 5 show a cross-section of a filter element 1 according to a second embodiment in the position attached to a connecting plate 11. The first outer end of outer wall 2A here extends against connecting plate 11. Annular disc 4 is formed integrally with outer wall 2A, wherein a second annular, preferably plastic disc 20 provided with fastening elements 5 is arranged in cavity 6. Fastening elements 5 are preferably formed integrally with the second annular disc 20. Likewise arranged in cavity 6 is a seal 21 which at least gastightly seals the fastening of filter element 1 to connecting plate 11. As further shown in figures 4 and 5, the second annular disc 20 extends over a greater length in axial direction than outer wall 2A, wherein the second annular disc 20 is provided with a chamfering 22 facing toward outer wall 2A.

Figures 6-8 show filter element 1 according to the second embodiment, from which it will be apparent that filter element 1 is suitable for connection to a flange 30. Flange 30 comprises an annular disc 31 and a cylindrical body 32 which extends from the annular body and which is suitable for arranging in an opening of a suction fan through which the air is to flow (not shown).

Annular disc 31 comprises keyholes 13 in which connecting elements 5 can be arranged in the same manner as in connecting plate 11 in order to connect filter element 1 to flange 30.

## Claims

1. Filter element (1), comprising:
- two at least substantially cylindrical gas-permeable walls (2A,2B), wherein an outer wall (2A) extends concentrically at a distance round an inner wall (2B) such that the two walls (2A,2B) define a space in which a filter material is arranged;
- an annular first closing member (4;20) extending between the two walls (2A,2B) close to a first end zone of the filter element (1) for the purpose of closing the space close to the first end zone;
- a disc-like second closing member (7) extending close to the second end zone of the filter element (1) for the purpose of closing the filter element (1) close to the second end zone; and
- coupling means (5) for releasable coupling of the first end zone of the filter element (1) to a connecting plate (11) or flange (30) such that in connected position the filter element (1) connects concentrically to an opening (12) in the connecting plate (11) or flange (30),
wherein:
- the two walls (2A,2B) and the first closing member (4;20) define a cavity (6) close to the first end zone of the filter element (1) for accommodating a seal;
**characterized in that**:
- the coupling means comprise at least two toadstool-like connecting elements (5) extending from the first closing member (4;20) in a direction away from the space, these connecting elements (5) being suitable for arranging in keyholes (13) of the connecting plate (11) or flange (30); and
- in connected position a first outer end of the outer wall (2A) extends against the connecting plate (11) or flange (30).

2. Filter element (1) as claimed in claim 1, wherein the inner wall (2B), close to the first end zone of the filter element (1), extends over a greater length in axial direction than the outer wall (2A) in order to form a centering edge for the purpose of centering the filter element (1) on the connecting plate (11) or flange (30).

3. Filter element (1) as claimed in claim 2, wherein a first outer end of the inner wall (2B) comprises a chamfering facing toward the outer wall (2A).

4. Filter element (1) as claimed in claim 1, 2 or 3, wherein the two walls (2A,2B) are provided with openings along their periphery.

5. Filter element (1) as claimed in any of the foregoing claims, wherein the filter material is active carbon.

6. Filter element (1) as claimed in any of the foregoing claims, wherein the second closing member (7) comprises a handgrip (8) for gripping the second closing member (7) for the purpose of displacing the filter element (1).

7. Filter installation for filtering air, comprising:
- a suction fan for suctioning air, which suction fan is provided with a connecting plate (11) or flange (30);
- at least one filter element (1) as claimed in any of the foregoing claims, comprising:
- two at least substantially cylindrical gas-permeable walls (2A,2B), wherein an outer wall (2A) extends concentrically at a distance round an inner wall (2B) such that the two walls (2A,2B) define a space in which a filter material is arranged;
- an annular first closing member (4;20) extending between the two walls (2A,2B) close to a first end zone of the filter element (1) for the purpose of closing the space close to the first end zone;
- a disc-like second closing member (7) extending close to the second end zone of the filter element (1) for the purpose of closing the filter element (1) close to the second end zone; and
- coupling means (5) for releasable coupling of the first end zone of the filter element (1) to the connecting plate (11) or flange (30) such that in connected position the filter element (1) connects concentrically to an opening (12) in the connecting plate (11) or flange (30),
wherein:
- the two walls (2A,2B) and the first closing member (4;20) define a cavity (6) close to the first end zone of the filter element (1) for accommodating a seal;
**characterized in that**:
- the filter element (1) is connected to the connecting plate (11) or flange (30) such that the filter element (1) is connected concentrically to an opening (12) in the connecting plate (11) or flange (30);
- the coupling means comprise at least two toadstool-like connecting elements (5) extending from the first closing member (4;20) in a direction away from the space, which connecting elements (5) are arranged in keyholes (13) of the connecting plate (11) or flange (30);
- the first outer end of the outer wall (2A) of the filter element (1) extends against the connecting plate (11) or flange (30); and
- a seal (21) is situated in the cavity (6) of the filter element (1).

8. Filter installation as claimed in claim 7, wherein the seal (21) is annular.

9. Filter installation as claimed in claim 7 or 8, wherein the seal (21) is manufactured from an elastic material.

## Patentansprüche

1. Filterelement (1), umfassend:
- zwei wenigstens im Wesentlichen zylindrische gasdurchlässige Wände (2A, 2B), wobei sich eine äußere Wand (2A) konzentrisch in einem Abstand um die innere Wand (2B) herum erstreckt, so dass die zwei Wände (2A, 2B) einen Abstand definieren in dem ein Filtermaterial angeordnet ist;
- ein ringförmiges erstes Verschlussbauteil (4; 20), das sich zum Zwecke den Abstand nahe des ersten Endbereiches zu schließen zwischen den beiden Wänden (2A, 2B) erstreckt, nahe einem ersten Endbereiches des Filterelements (1);
- ein scheibenähnliches zweites Verschlussbauteil (7), das sich zum Zwecke das Filterelement (1) nahe dem zweiten Endbereich zu verschließen nahe dem zweiten Endbereich des Filterelements (1) erstreckt; und
- Verbindungsmittel (5) für eine lösbare Verbindung des ersten Endbereiches des Filterelements (1) mit einer Verbindungsplatte (11) oder Flansch (30), so dass sich in der verbundenen Position das Filterelement (1) konzentrisch mit einer Öffnung (12) in der Verbindungsplatte (11) oder Flansch (30) verbindet, wobei
- die zwei Wände (2A, 2B) und das erste Verschlusselement (4; 20) einen Hohlraum (6) nahe des ersten Endbereiches des Filterelements (1) definieren, um eine Dichtung unterzubringen;
**dadurch gekennzeichnet, dass**:
- die Verbindungsmittel wenigstens zwei pilzähnliche Verbindungselemente (5) umfassen, die sich von dem ersten Verschlussbauteil (4, 20) in einer Richtung weg von dem Abstand erstrecken, diese Verbindungselemente (5) passend sind, um sie in Schlüssellöchern (13) der Verbindungsplatte (11) oder Flansch (30) anzuordnen; und
- in einer verbundenen Position ein erstes äußeres Ende der äußeren Wand (2A) sich gegen die Verbindungsplatte (11) oder Flansch (30) erstreckt.

2. Filterelement (1) gemäß Anspruch 1, wobei sich die innere Wand (2B) nahe dem ersten Endbereiches des Filterelements (1) über eine größere Länge in axialer Richtung erstreckt als die äußere Wand (2A), um so eine Zentrierungskante zum Zwecke des Zentrierens des Filterelements (1) auf der Verbindungsplatte (11) oder Flansch (30) zu formen.

3. Filterelement (1) gemäß Anspruch 2, wobei ein erstes äußeres Ende der inneren Wand (2B) eine Abschrägung umfasst, die gegen die äußere Wand (2A) gerichtet ist.

4. Filterelement (1) gemäß Anspruch 1, 2 oder 3, wobei die zwei Wände (2A, 2B) mit Öffnungen entlang des Umfangs versehen sind.

5. Filterelement (1) gemäß einem der vorhergehenden Ansprüche, wobei das Filtermaterial Aktivkohle ist.

6. Filterelement (1) gemäß einem der vorhergehenden Ansprüche, wobei ein zweites Verschlussbauteil (7) einen Handgriff (8) umfasst, um das zweite Verschlussbauteil (7) zu greifen, um das Filterelement (1) zu verlagern.

7. Filterinstallation zur Luftfilterung, umfassend:
- ein Ansauggebläse, um Luft anzusaugen, dieses Ansauggebläse ist mit einer Verbindungsplatte (11) oder Flansch (30) ausgestattet;
- wenigstens ein Filterelement (1) gemäß einem der vorhergehenden Ansprüche, umfassend:
- zwei wenigstens im Wesentlichen zylindrische gasdurchlässige Wände (2A, 2B), wobei eine äußere Wand (2A) sich konzentrisch mit einem Abstand um die innere Wand (2B) herum erstreckt, so dass die zwei Wände (2A, 2B) einen Abstand definieren in dem ein Filtermaterial angeordnet ist;
- ein ringförmiges erstes Verschlussbauteil (4, 20), das sich zum Zwecke den Abstand nahe des ersten Endbereiches zu schließen zwischen den beiden Wänden (2A, 2B) erstreckt, nahe einem ersten Endbereiches des Filterelements (1);
- ein scheibenähnliches zweites Verschlussbauteil (7), das sich zum Zwecke das Filterelement (1) nahe dem zweiten Endbereich zu verschließen nahe dem zweiten Endbereich des Filterelements (1) erstreckt; und
- Verbindungsmittel (5) für eine lösbare Verbindung eines ersten Endbereiches des Filterelements (1) mit der Verbindungsplatte (11) oder Flansch (30), so dass in verbundener Position das Filterelement (1) konzentrisch mit einer Öffnung (12) in der Verbindungsplatte (11) oder Flansch (30) verbunden ist,
wobei:
- die zwei Wände (2A, 2B) und das erste Verschlussbauteil (4, 20) nahe dem ersten Endbereich des Filterelements (1) einen Hohlraum (6) definieren, um eine Dichtung unterzubringen;
**dadurch gekennzeichnet, dass**:
- das Filterelement (1) mit der Verbindungsplatte (11) oder Flansch (30) so verbunden ist, dass das Filterelement (1) konzentrisch mit einer Öffnung (12) in der Verbindungsplatte (11) oder Flansch (30) verbunden ist;
- die Verbindungsmittel wenigsten zwei pilzähnliche Verbindungselemente (5) umfassen, die sich vom ersten Verschlussbauteil (4, 20) in einer Richtung wegt von dem Abstand erstrecken, diese Verbindungselemente (5) in Schlüssellöchern (13) der Verbindungsplatte (11) oder Flansch (30) angeordnet sind;
- ein erstes äußeres Ende der äußeren Wand (2A) des Filterelements (1) sich gegen die Verbindungsplatte (11) oder Flansch (30) erstreckt; und
- eine Dichtung (21) im Hohlraum (6) des Filterelements (1) gelegen ist.

8. Filterinstallation gemäß Anspruch 7, wobei die Dichtung (21) ringförmig ist.

9. Filterinstallation gemäß Anspruch 7 oder 8, wobei die Dichtung (21) aus einem elastischen Material hergestellt ist.

## Revendications

1. Elément de filtre (1), comprenant :
au moins deux parois perméables au gaz sensiblement cylindriques (2A, 2B), dans lequel une paroi externe (2A) s'étend de manière concentrique à une certaine distance autour d'une paroi interne (2B) de sorte que les deux parois (2A, 2B) définissent un espace dans lequel un matériau filtrant est agencé ;
un premier élément de fermeture annulaire (4 ; 20) s'étendant entre les deux parois (2A, 2B) à proximité d'une première zone d'extrémité de l'élément de filtre (1) afin de fermer l'espace à proximité de la première zone d'extrémité ;
un deuxième élément de fermeture en forme de disque (7) s'étendant à proximité d'une deuxième zone d'extrémité de l'élément de filtre (1) afin de fermer l'élément de filtre (1) à proximité de la deuxième zone d'extrémité ; et
des moyens de couplage (5) pour le couplage amovible de la première zone d'extrémité de l'élément de filtre (1) à une plaque de raccordement (11) ou au rebord (30) de sorte que dans la position raccordée, l'élément de filtre (1) est raccordé de manière concentrique à une ouverture (12) dans la plaque de raccordement (11) ou rebord (30), dans lequel :
les deux parois (2A, 2B) et le premier élément de fermeture (4 ; 20) définissent une cavité (6) à proximité de la première zone d'extrémité de l'élément de filtre (1) pour loger un joint d'étanchéité ;
**caractérisé en ce que** :
les moyens de couplage comprennent au moins deux éléments de raccordement en forme de champignon (5) s'étendant à partir du premier élément de fermeture (4 ; 20) dans une direction à distance de l'espace, ces éléments de raccordement (5) étant appropriés pour être agencés dans des trous de clavette (13) de la plaque de raccordement (11) ou du rebord (30) ; et
dans la position raccordée, une première extrémité externe de la paroi externe (2A) s'étend contre la plaque de raccordement (11) ou rebord (30).

2. Elément de filtre (1) selon la revendication 1, dans lequel la paroi interne (2B), à proximité de la première zone d'extrémité de l'élément de filtre (1), s'étend sur une plus grande longueur dans la direction axiale que la paroi externe (2A) afin de former un bord de centrage afin de centrer l'élément de filtre (1) sur la plaque de raccordement (11) ou le rebord (30).

3. Elément de filtre (1) selon la revendication 2, dans lequel une première extrémité externe de la paroi interne (2B) comprend un chanfrein orienté vers la paroi externe (2A).

4. Elément de filtre (1) selon la revendication 1, 2 ou 3, dans lequel les deux parois (2A, 2B) sont prévues avec des ouvertures le long de leur périphérie.

5. Elément de filtre (1) selon l'une quelconque des revendications précédentes, dans lequel le matériau de filtre est du charbon actif.

6. Elément de filtre (1) selon l'une quelconque des revendications précédentes, dans lequel le deuxième élément de fermeture (7) comprend une poignée (8) pour saisir le deuxième élément de fermeture (7) afin de déplacer l'élément de filtre (1).

7. Installation de filtre pour filtrer l'air, comprenant :
un ventilateur d'aspiration pour aspirer l'air, lequel ventilateur d'aspiration est prévu avec une plaque de raccordement (11) ou rebord (30) ;
au moins un élément de filtre (1) selon l'une quelconque des revendications précédentes, comprenant :
au moins deux parois perméables au gaz sensiblement cylindriques (2A, 2B), dans laquelle une paroi externe (2A) s'étend de manière concentrique sur une certaine distance autour d'une paroi interne (2B) de sorte que les deux parois (2A, 2B) définissent un espace dans lequel un matériau filtrant est agencé ;
un premier élément de fermeture annulaire (4 ; 20) s'étendant entre les deux parois (2A, 2B) à proximité d'une première zone d'extrémité de l'élément de filtre (1) afin de fermer l'espace à proximité de la première zone d'extrémité ;
un deuxième élément de fermeture en forme de disque (7) s'étendant à proximité de la deuxième zone d'extrémité de l'élément de filtre (1) afin de fermer l'élément de filtre (1) à proximité de la deuxième zone d'extrémité ; et
des moyens de couplage (5) pour le couplage amovible de la première zone d'extrémité de l'élément de filtre (1) à la plaque de raccordement (11) ou rebord (30) de sorte que dans la position raccordée, l'élément de filtre (1) est raccordé de manière concentrique à une ouverture (12) dans la plaque de raccordement (11) ou le rebord (30),
dans laquelle :
les deux parois (2A, 2B) et le premier élément de fermeture (4 ; 20) définissent une cavité (6) à proximité de la première zone d'extrémité de l'élément de filtre (1) pour loger un joint d'étanchéité ;
**caractérisée en ce que** :
l'élément de filtre (1) est raccordé à la plaque de raccordement (11) ou au rebord (30) de sorte que l'élément de filtre (1) est raccordé de manière concentrique à une ouverture (12) dans la plaque de raccordement (11) ou le rebord (30) ;
les moyens de couplage comprennent au moins deux éléments de raccordement en forme de champignon (5) s'étendant à partir du premier élément de fermeture (4 ; 20) dans une direction à distance de l'espace, lesquels éléments de raccordement (5) sont agencés dans des trous de clavette (13) de la plaque de raccordement (11) ou du rebord (30) ;
la première extrémité externe de la paroi externe (2A) de l'élément de filtre (1) s'étend contre la plaque de raccordement (11) ou le rebord (30) ; et
un joint d'étanchéité (21) est situé dans la cavité (6) de l'élément de filtre (1).

8. Installation de filtre selon la revendication 7, dans laquelle le joint d'étanchéité (21) est annulaire.

9. Installation de filtre selon la revendication 7 ou 8, dans laquelle le joint d'étanchéité (21) est fabriqué à partir d'un matériau élastique.
